# EUROPEAN PATENT APPLICATION

(11) **EP 4 231 497 A1**
(43) Date of publication of application: **23.08.2023**
(21) Application number: 21879679.5
(22) Date of filing: 08.03.2021
(51) Int. Cl.: H02J 50/05

(54) **WIRELESS POWER-FEEDING APPARATUS**

(30) Priority: 14.10.2020 JP 2020173473
(71) Applicant: OMRON Corporation, Kyoto-shi, Kyoto 600-8530 (JP)
(72) Inventor: WATANABE, Tomonori, Kyoto-shi, Kyoto 600-8530 (JP); NAGANO, Masaaki, Kyoto-shi, Kyoto 600-8530 (JP); TANINO, Kohei, Kyoto-shi, Kyoto 600-8530 (JP); KUBO, Masahiko, Kyoto-shi, Kyoto 600-8530 (JP); SUMI, Kosuke, Kyoto-shi, Kyoto 600-8530 (JP); YOSHIMARU, Kosuke, Kyoto-shi, Kyoto 600-8530 (JP)
(74) Representative: HGF
(86) International application number: PCT/JP2021/009053
(87) International publication number: WO 2022/079931

(57) **Abstract**

To provide a wireless power-feeding apparatus capable of securing a large electrode for wirelessly feeding electric power to an electronic device supported by a rail by means of an electric field coupling system. A wireless power-feeding apparatus includes a DIN rail capable of supporting at least one electronic device, two electrodes configured to wirelessly feed power to the electronic device by an electric field coupling system, and a holding member for holding the two electrodes. The two electrodes extend along a longitudinal direction of the DIN rail, and are disposed so as to sandwich the DIN rail in a width direction of the DIN rail.

## Description

### TECHNICAL FIELD

The present disclosure relates to a wireless power-feeding apparatus that wirelessly feeds electric power to an electronic device supported by a rail.

### BACKGROUND ART

A wireless power-feeding apparatus that wirelessly feeds electric power to an electronic device supported by a rail is known. For example, Patent Document 1 discloses a system in which an energy transmission interface is disposed in a U-shaped free space of a hat-shaped mounting rail having a U-shaped base. In this system, power is wirelessly fed from an energy transmission interface to a bus subscriber module installed on the hat-shaped mounting rail.

One method for wirelessly feeding power is an electric field coupling system. The electric field coupling system is a system in which electrodes are provided on the power transmission side and the power reception side respectively, and electric power is transmitted using an electric field generated when these electrodes approach each other.

### PRIOR ART DOCUMENT

### PATENT DOCUMENT

Patent Document 1: JP 5928495 B2

### SUMMARY OF THE INVENTION

### PROBLEMS TO BE SOLVED BY THE INVENTION

In the case where the system disclosed in Patent Document 1 feeds power from an energy transmission interface to a bus subscriber module by means of an electric field coupling system, there are the following problems.

In this case, the energy transmission interface serves as an electrode on the power transmission side, and an electrode on the power reception side is provided to the bus subscriber module. In the system disclosed in Patent Document 1, the arrangement area of the energy transmission interface (electrode on the power transmission side) is limited to the U-shaped free space of the hat-shaped mounting rail. Therefore, it is difficult to widen the width of the electrode on the power transmission side. Accordingly, it is difficult to feed large power to the bus subscriber module.

Therefore, an object of the present disclosure is to solve the above-described problem, and to provide a wireless power-feeding apparatus capable of securing a wider width of an electrode for wirelessly feeding electric power to an electronic device supported by a rail by means of an electric field coupling system, compared with a configuration in which the electrode is disposed in the rail.

### MEANS FOR SOLVING THE PROBLEMS

In order to achieve the above object, the present disclosure is configured as described below.

A wireless power-feeding apparatus according to an aspect of the present disclosure includes:
a rail capable of supporting at least one electronic device; and
two electrodes configured to wirelessly feed power to the electronic device by an electric field coupling system.

The two electrodes extend along a longitudinal direction of the rail, and are disposed so as to sandwich the rail in a width direction of the rail.

### EFFECTS OF THE INVENTION

According to the present disclosure, the width of an electrode for wirelessly feeding electric power to an electronic device supported by a rail by means of an electric field coupling system can be secured wider than that in a configuration in which the electrode is disposed in the rail.

### BRIEF DESCRIPTION OF THE DRAWINGS

FIG. 1 is a plan view of a wireless power-feeding apparatus according to a first embodiment of the present disclosure.
FIG. 2 is a cross-sectional view taken along line A-A in FIG. 1.
FIG. 3 is a circuit diagram of an equivalent circuit of the wireless power-feeding apparatus according to the first embodiment of the present disclosure.
FIG. 4 is a diagram of a wireless power-feeding apparatus according to a modification of the first embodiment of the present disclosure, corresponding to the A-A cross section in FIG. 1.
FIG. 5 is a plan view of a wireless power-feeding apparatus according to a second embodiment of the present disclosure.
FIG. 6 is a cross-sectional view taken along line B-B in FIG. 5.
FIG. 7 is a plan view of a wireless power-feeding apparatus according to a third embodiment of the present disclosure.
FIG. 8 is a cross-sectional view taken along line C-C in FIG. 7.

### MODES FOR CARRYING OUT THE DISCLOSURE

A wireless power-feeding apparatus according to an aspect of the present disclosure includes:
a rail capable of supporting at least one electronic device; and
two electrodes configured to wirelessly feed power to the electronic device by an electric field coupling system.
The two electrodes extend along a longitudinal direction of the rail, and are disposed so as to sandwich the rail in a width direction of the rail.

According to this configuration, the electrodes are disposed outside the rail. Therefore, the electrodes can be enlarged without being limited by the size and the shape of the rail.

According to this configuration, the two electrodes are disposed opposite to each other across the rail. Therefore, the possibility that the two electrodes interfere with each other can be reduced.

A holding member for holding the two electrodes may be further provided. According to this configuration, since the holding member holds the two electrodes, the arrangement positions of the two electrodes can be stabilized.

The holding member may include a main body portion, and a pair of first protrusions and a pair of second protrusions. The pair of first protrusions and the pair of second protrusions protrude outward from the main body portion in the width direction, are provided corresponding to the two electrodes respectively, and face each other in a thickness direction of the rail intersecting the width direction and the longitudinal direction. One of the two electrodes may be sandwiched between one of the pair of first protrusions and one of the pair of second protrusions, and the other of the two electrodes may be sandwiched between the other of the pair of first protrusions and the other of the pair of second protrusions. According to this configuration, each electrode can be held between each of the first protrusions and each of the second protrusions.

Each of the pair of first protrusions may include a projection protruding toward each of the second protrusions at the tip of each of the pair of first protrusions. The projections may restrict the respective two electrodes, sandwiched by the pair of first protrusions and the pair of second protrusions, from coming out of the spaces between the pair of first protrusions and the pair of second protrusions. According to this configuration, it is possible to prevent each electrode from coming out of the space between each of the first protrusions and each of the second protrusions.

Each of the projections may have an inclined surface inclined with respect to the pair of second protrusions toward the outside of the main body portion. According to this configuration, when the electrode is inserted between the first protrusion and the second protrusion, a force in a direction away from the second protrusion acts on the first protrusion by the electrode pushing the surface of the projection. As a result, the first protrusion bends, and the space between the first protrusion and the second protrusion increases. As a result, the electrode can be easily inserted between the first protrusion and the second protrusion.

The holding member may include an engagement portion engageable with the rail. According to this configuration, the holding member is held by the rail by the engagement of the engagement portion with the rail.

The rail may include a bottom portion, a pair of side portions protruding in the thickness direction of the rail intersecting the width direction and the longitudinal direction, from both ends of the bottom portion in the width direction, and a pair of flange portions each protruding in the width direction from each of the pair of side portions toward the outside thereof. The engagement portion may hold the pair of flange portions from both sides in the thickness direction of the rail. According to this configuration, the configuration of the engagement portion can be a simple configuration that sandwiches the flange portions of the rail.

The holding member may be provided to the electronic device. According to this configuration, a space for disposing the holding member and a space for disposing the electronic device can be shared. Therefore, the space for disposing the holding member and the electronic device can be saved.

For example, the rail is a DIN rail.

### <First Embodiment>

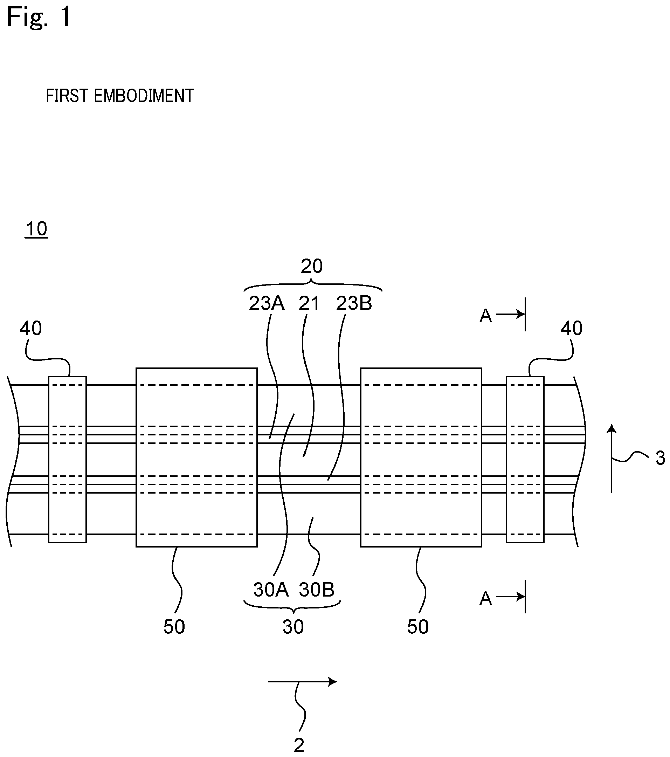

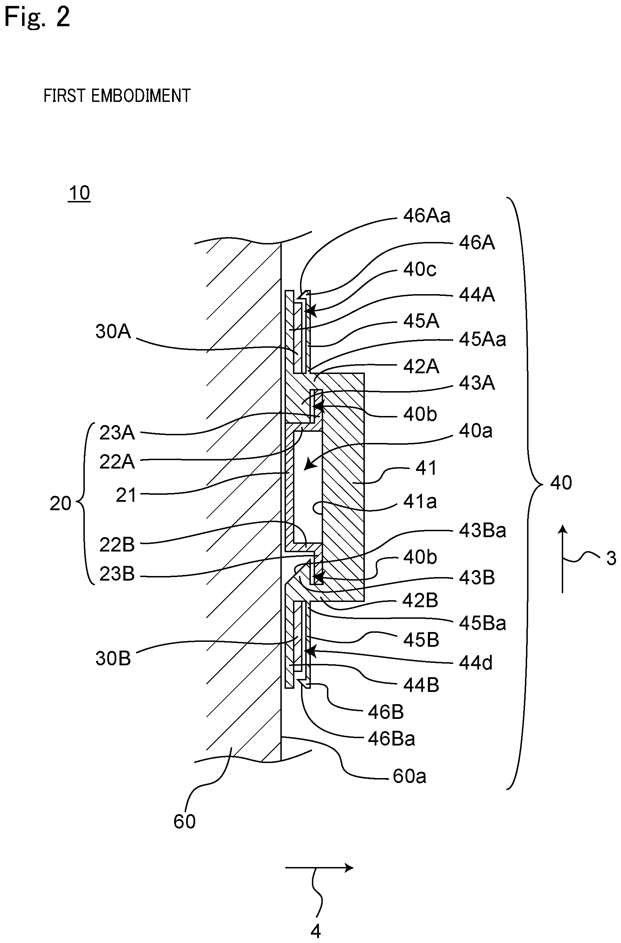

FIG. 1 is a plan view of a wireless power-feeding apparatus according to a first embodiment of the present disclosure. FIG. 2 is a cross-sectional view taken along line A-A in FIG. 1.

The wireless power-feeding apparatus 10 wirelessly feeds an electrode to an electronic device 50 attached to a DIN rail 20.

As shown in FIGS. 1 and 2, the wireless power-feeding apparatus 10 includes the DIN rail 20, an electrode 30, and a holding member 40.

The DIN rail 20 is produced according to the German Industrial Standard (DIN). In the first embodiment, the DIN rail 20 is attached to a wall 60. The electronic device 50 can be attached to the DIN rail 20 as described later. The DIN rail 20 is an example of a rail.

The DIN rail 20 extends in a longitudinal direction 2. The length of the DIN rail 20 in a width direction 3 is shorter than the length of the DIN rail 20 in the longitudinal direction 2. The width direction 3 of the DIN rail 20 is orthogonal to the longitudinal direction 2 of the DIN rail 20 in a plan view. The length of the DIN rail 20 in a thickness direction 4 is shorter than the length of the DIN rail 20 in the width direction 3. The thickness direction 4 of the DIN rail 20 is orthogonal to the longitudinal direction 2 of the DIN rail 20 and the width direction 3 of the DIN rail 20. As shown in FIG. 2, a cross section of the DIN rail 20 has a substantially U-shape.

In the following description, the longitudinal direction of the DIN rail 20 is defined as the longitudinal direction 2, the width direction of the DIN rail 20 is defined as the width direction 3, and the thickness direction of the DIN rail 20 is defined as the thickness direction 4. In the following description of the electrode 30 and the holding member 40, the longitudinal direction 2, the width direction 3, and the thickness direction 4 in a state where the electrode 30 and the holding member 40 are disposed together with the DIN rail 20.

The DIN rail 20 includes a bottom portion 21, a pair of side portions 22A and 22B, and a pair of flange portions 23A and 23B. The DIN rail 20 is formed in a shape having a substantially U-shaped cross section as shown in FIG. 2 with the plate-shaped member being bent.

As illustrated in FIG. 1, the bottom portion 21 extends in the longitudinal direction 2 and the width direction 3.

As illustrated in FIG. 2, the pair of side portions 22A and 22B protrude in the thickness direction 4 from both ends in the width direction 3 of the bottom portion 21. That is, the pair of side portions 22A and 22B and the bottom portion 21 are orthogonal to each other. The side portion 22A protrudes from one end in the width direction 3 of the bottom portion 21. The side portion 22B protrudes from the other end in the width direction 3 of the bottom portion 21.

The pair of flange portions 23A and 23B protrude in the width direction 3 from the tips of the pair of side portions 22A and 22B toward the outside of the pair of side portions 22A and 22B, respectively. That is, the side portions 22A and 22B protrude in directions opposite to each other. The flange portion 23A and the side portion 22A are orthogonal to each other, and the flange portion 23B and the side portion 22B are orthogonal to each other.

A plurality of through holes (not illustrated) are formed in the bottom portion 21. By inserting screws or the like into the through holes, the DIN rail 20 is attached to a wall surface 60a of the wall 60 as illustrated in FIG. 2. At that time, the bottom portion 21 is in contact with the wall surface 60a, and the pair of side portions 22A and 22B protrude from the wall surface 60a in the thickness direction 4.

As shown in FIG. 1, the DIN rail 20 can support at least one electronic device 50. In FIG. 1, two electronic devices 50 are supported by the DIN rail 20. The electronic device 50 is, for example, a power feeding device, a temperature control device, a sensor unit, a communication unit, a terminal block, or the like. Each electronic device 50 includes a groove engageable with the DIN rail 20. The groove engages with the pair of side portions 22A and 22B and the pair of flange portions 23A and 23B, whereby the electronic device 50 is supported by the DIN rail 20.

The electrode 30 is a plate-like member made of a conductor such as copper or aluminum. As shown in FIG. 1, the length of the electrode 30 in the longitudinal direction 2 is longer than the length of the electrode 30 in the width direction 3. That is, the electrode 30 extends along the longitudinal direction 2. As shown in FIG. 2, the length of the electrode 30 in the thickness direction 4 is shorter than the length of the electrode 30 in the width direction 3. The shape of the electrode 30 is not limited to the plate shape as described above, and may be, for example, a cylindrical shape or the like.

As shown in FIGS. 1 and 2, the wireless power-feeding apparatus 10 includes two electrodes 30A and 30B as the electrode 30. The two electrodes 30A and 30B are arranged at an interval in the width direction 3. The DIN rail 20 is positioned between the two electrodes 30A and 30B. That is, the two electrodes 30A and 30B are arranged so as to sandwich the DIN rail 20 in the width direction 3. The electrode 30A is disposed on the side of the side portion 22A and the flange portion 23A, of the pair of side portions 22A and 22B and the pair of flange portions 23A and 23B. The electrode 30B is disposed on the side of the side portion 22B and the flange portion 23B, of the pair of side portions 22A and 22B and the pair of flange portions 23A and 23B.

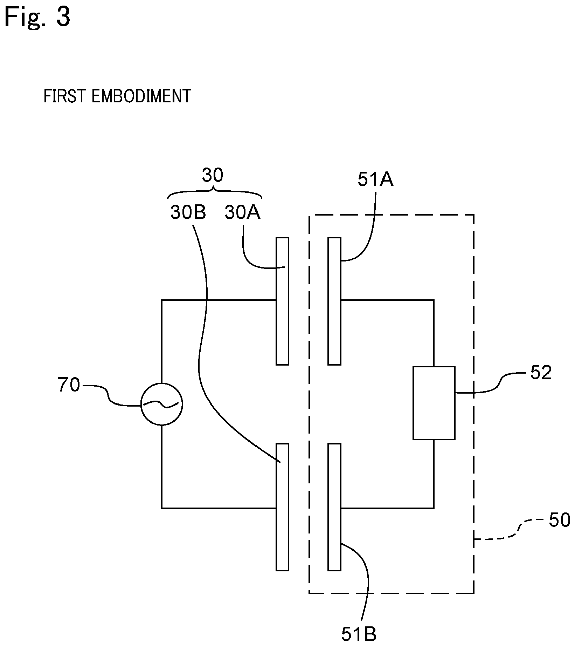

FIG. 3 is a circuit diagram of an equivalent circuit of the wireless power-feeding apparatus 10 according to the first embodiment of the present disclosure.

In FIG. 3, the electrodes 30A and 30B of the wireless power-feeding apparatus 10 wirelessly feed the electrodes to the electronic device 50 supported by the DIN rail 20 by means of the electric field coupling system.

As illustrated in FIG. 3, the electronic device 50 includes two electrodes 51A and 51B. The electrodes 51A and 51B are electrically connected via a load 52. The load 52 is a device that converts a flowing current into heat or the like, and is, for example, a circuit having various electronic components such as a resistor, a capacitor, an inductor, and a transistor. In a state where the electronic device 50 is supported by the DIN rail 20, the electrode 51A of the electronic device 50 faces the electrode 30A of the wireless power-feeding apparatus 10, and the electrode 51B of the electronic device 50 faces the electrode 30B of the wireless power-feeding apparatus 10.

The electrodes 30A and 30B of the wireless power-feeding apparatus 10 are electrically connected via an AC power supply 70. Instead of the AC power supply 70, a DC power supply may be provided, and the DC power supply and the electrodes 30A and 30B may be electrically connected via a D/A converter.

With the above configuration, the electrodes 30A and 51A facing each other and the electrodes 30B and 51B facing each other function as capacitors respectively. When the AC power supply 70 is operated, a high-frequency current flows through the capacitor. As a result, electric power is wirelessly fed from the electrodes 30A and 30B to the electronic device 50.

As shown in FIGS. 1 and 2, the holding member 40 holds the two electrodes 30A and 30B. As shown in FIG. 2, the cross section of the holding member 40 has a substantially U-shape.

As illustrated in FIG. 2, the holding member 40 includes a base portion 41, a pair of side portions 42A and 42B, a pair of protrusions 43A and 43B, a pair of protrusions 44A and 44B, and a pair of protrusions 45A and 45B.

In the first embodiment, the base portion 41 has a rectangular parallelepiped shape. The length of the base portion 41 in the longitudinal direction 2 is shorter than the length of the base portion 41 in the width direction 3. The length of the base portion 41 in the thickness direction 4 is shorter than the length of the base portion 41 in the longitudinal direction 2 and shorter than the length of the base portion 41 in the width direction 3.

The pair of side portions 42A and 42B protrude in the thickness direction 4 from both ends in the width direction 3 of the base portion 41. The side portion 42A protrudes from one end in the width direction 3 of the base portion 41. The side portion 42B protrudes from the other end in the width direction 3 of the base portion 41.

The base portion 41 and the pair of side portions 42A and 42B are examples of the main body portion.

The pair of protrusions 43A and 43B protrude inward in the width direction 3 from the tips of the pair of side portions 41A and 42B, respectively. That is, the pair of protrusions 43A and 43B protrude in directions opposite to each other. The protrusion 43A protrudes from the tip of the side portion 42A. The protrusion 43B protrudes from the tip of the side portion 42B. The protrusions 43A and 43B face a surface 41a of the base portion 41 in the width direction 3.

A surface 43Ba of the protrusion 43B is inclined with respect to the width direction 3. The surface 43Ba is a surface facing outward in the thickness direction 4 of the holding member 40. The surface 43Ba extends outward in the width direction 4 of the holding member 40 as it goes outward in the thickness direction 3 of the holding member 40.

The pair of protrusions 44A and 44B protrude outward in the width direction 3 from the tips of the pair of side portions 42A and 42B, respectively. That is, the pair of protrusions 44A and 44B protrude in directions opposite to each other. The protrusion 44A protrudes from the tip of the side portion 42A. The protrusion 44B protrudes from the tip of the side portion 42B. The pair of protrusions 44A and 44B is an example of a pair of second protrusions.

The pair of protrusions 45A and 45B protrude outward in the width direction 3 from the pair of side portions 42A and 42B, respectively. That is, the pair of protrusions 45A and 45B protrude in directions opposite to each other. The protrusion 45A protrudes from the side portion 42A. The protrusion 45A is located on the proximal end side of the side portion 41A with respect to the protrusion 44A. The protrusion 45A faces the protrusion 44A in the thickness direction 4. The protrusion 45B protrudes from the side portion 42B. The protrusion 45B is located on the proximal end side of the side portion 41B with respect to the protrusion 44B. The protrusion 45B faces the protrusion 44B in the thickness direction 4. The pair of protrusions 45A and 45B is an example of a pair of first protrusions.

In the first embodiment, the protrusion 44A and the protrusion 45A have the same length in the width direction 3. However, the protrusion 44A and the protrusion 45A may have different lengths in the width direction 3. Similarly, the protrusion 44B and the protrusion 45B have the same length in the width direction 3, but may have different lengths in the width direction 3.

The protrusion 45A includes a projection 46A. The projection 46A is provided at the tip of the protrusion 45A. The projection 46A protrudes in the thickness direction 4 from the protrusion 45A toward the protrusion 44A. The protrusion 45B includes a projection 46B. The projection 46B is provided at the tip of the protrusion 45B. The projection 46B protrudes in the thickness direction 4 from the protrusion 45B toward the protrusion 44B.

The projection 46A includes a surface 46Aa facing outward in the width direction 3. The surface 46Aa is a surface facing outward in the width direction 3 of the holding member 40. The surface 46Aa is inclined with respect to the width direction 3. The surface 46Aa extends so as to approach the protrusion 44A as it goes closer to the inside in the width direction 3 of the holding member 40. That is, the surface 46Aa is inclined with respect to the protrusion 44A toward the outside of the side portion 42A.

The projection 46B includes a surface 46Ba facing outward in the width direction 3. The surface 46Ba is a surface facing outward in the width direction 3 of the holding member 40. The surface 46Ba is inclined with respect to the width direction 3. The surface 46Ba extends so as to approach the protrusion 44B as it goes closer to the inside in the width direction 3 of the holding member 40. That is, the surface 46Ba is inclined with respect to the protrusion 44B toward the outside of the side portion 42B.

The surfaces 46Aa and 46Ba are examples of inclined surfaces.

Hereinafter, a procedure through which the holding member 40 is supported by the DIN rail 20 and the electrodes 30A and 30B are held by the holding member 40 will be described. The procedure is generally as follows. First, the DIN rail 20 is attached to the wall surface 60a of the wall 60. Then, the holding member 40 is engaged with the DIN rail 20, whereby the holding member 40 is supported by the DIN rail 20. Then, the electrodes 30A and 30B are inserted into the holding member 40, whereby the electrodes 30A and 30B are held by the holding member 40. Note that the procedure through which the holding member 40 is supported by the DIN rail 20 and the electrodes 30A and 30B are held by the holding member 40 may be different from that described above. For example, the holding member 40 may be engaged with the DIN rail 20 after the electrodes 30A and 30B are held by the holding member 40.

As described below in detail, the holding member 40 engages with the DIN rail 20 and is supported by the DIN rail 20.

The DIN rail 20 supports the holding member 40 in a state of being inserted between the pair of side portions 42A and 42B of the holding member 40.

Here, the back side of a space 42a between the pair of side portions 42A and 42B (the side of the surface 41a of the base portion 41) is wider than the front side of the space 42a. This is because the pair of protrusions 43A and 43B are present at the front side of the space 42a. The length in the width direction 3 between the pair of protrusions 43A and 43B (the length in the width direction 3 at the front side of the space 42a) is substantially the same as the length in the width direction 3 from the outer surface of the side portion 22A to the outer surface of the side portion 22B of the DIN rail 20.

Between the surface 41a of the base portion 41 of the holding member 40 and each of the protrusions 43A and 43B, a gap 40b is formed. The length in the width direction 3 at the back side of the space 40a is a length including the length in the width direction 3 of the gap 40b. That is, the length in the width direction 3 at the back side of the space 40a is the length in the width direction between the pair of side portions 42A and 42B. The length in the width direction 3 at the back side of the space 40a is substantially the same as the length in the width direction 3 from the tip of the flange portion 23A to the tip of the flange portion 23B of the DIN rail 20.

The bottom portion 21 and the pair of side portions 22A and 22B of the DIN rail 20 are positioned between the pair of protrusions 43A and 43B.

In addition, the flange portions 23A and 23B of the DIN rail 20 are inserted into the respective gaps 40b between the surface 41a and the protrusions 43A and 43B. As a result, the surface 41a of the base portion 41 and the protrusions 43A and 43B sandwich the flange portions 23A and 23B from both sides in the thickness direction 4. That is, the surface 41a of the base portion 41 of the holding member 40 and the protrusions 43A and 43B are engaged with the flange portions 23A and 23B of the DIN rail 20. As a result, the holding member 40 is supported by the DIN rail 20. The surface 41a of the base portion 41 of the holding member 40 and the protrusions 43A and 43B are examples of engagement portions.

In the process of being supported by the DIN rail 20, the holding member 40 is brought close to the flange portions 23A and 23B of the DIN rail 20 along the thickness direction 4. At this time, the surface 43Ba of the protrusion 43B of the holding member 40 comes into contact with the flange portion 23B. Then, a reaction force acts on the surface 43Ba from the flange portion 23B. Since the surface 43Ba is inclined with respect to the width direction 3, a part of the reaction force is a force that pushes the protrusion 43B outward in the width direction 3. Therefore, the protrusion 43B is bent outward in the width direction 3. As a result, the length in the width direction 3 between the pair of protrusions 43A and 43B (the length in the width direction 3 at the front side of the space 40a) becomes longer, so that the flange portions 23A and 23B pass through the front side of the space 40a and reach the back side of the space 40a. As a result, the flange portions 23A and 23B are inserted into the respective gaps 40b between the surface 41a and the protrusions 43A and 43B, and the holding member 40 is supported by the DIN rail 20.

As described in detail below, the holding member 40 holds the two electrodes 30A and 30B.

A gap 40c is formed between the protrusions 44A and 45A of the holding member 40. The length of the gap 40c in the thickness direction 4 is substantially the same as the length of the electrode 30A in the thickness direction 4. A gap 40d is formed between the protrusions 44B and 45B of the holding member 40. The length of the gap 40d in the thickness direction 4 is substantially the same as the length of the electrode 30B in the thickness direction 4. As a result, the electrode 30A is sandwiched between the protrusions 44A and 45A, and the electrode 30B is sandwiched between the protrusions 44B and 45B. That is, the holding member 40 includes the protrusions 44A and 45A that hold the electrode 30A and the protrusions 44B and 45B that hold the electrode 30B. This means that the holding member 40 includes the protrusions 44A and 45A facing each other in the thickness direction 4 corresponding to the electrode 30A, and includes the protrusions 44B and 45B facing each other in the thickness direction 4 corresponding to the electrode 30B.

In the process of being held by the holding member 40, the electrode 30A is brought close to the tips of the protrusions 44A and 45A from the outside in the width direction 3 of the holding member 40 along the width direction 3. Here, the projection 46A is provided at the tip of the protrusion 45A. In the portion where the projection 46A is present, the length in the thickness direction 4 between the protrusions 44A and 45A is shorter than the length in the thickness direction 4 of the electrode 30A. Therefore, the electrode 30A comes into contact with and presses the surface 46Aa of the projection 46A provided to the protrusion 45A. Since the surface 46Aa is inclined with respect to the width direction 3, a part of the pressing force acting on the surface 46Aa is a force for bending the protrusion 45A in the thickness direction 4 so as to be away from the protrusion 44A. As a result, since the space between the protrusions 44A and 45A increases, the electrode 30A passes through the projection 46A and is inserted between the protrusions 44A and 45A. As a result, the electrode 30A is sandwiched between the protrusions 44A and 45A, and is supported by the holding member 40. In this state, the projection 46A restricts the electrode 30A from falling off from the space between the protrusions 44A and 45A.

The electrode 30B is brought close to the tips of the protrusions 44B and 45B along the width direction 3 in the same manner as the electrode 30A. The electrode 30B presses the surface 46Ba of the projection 46B provided at the tip of the protrusion 45B, thereby increasing the space between the protrusions 44B and 45B. As a result, the electrode 30B passes through the projection 46B, is sandwiched between the protrusions 44B and 45B, and is supported by the holding member 40. In this state, the projection 46B restricts the electrode 30B from falling off from the space between the protrusions 44B and 45B.

According to the first embodiment, the electrodes 30A and 30B are disposed outside the DIN rail 20. Therefore, the electrodes 30 A and 30B can be enlarged without being limited by the size and the shape of the DIN rail 20.

According to the first embodiment, the two electrodes 30A and 30B are disposed opposite to each other across the DIN rail 20. Therefore, the possibility that the two electrodes 30A and 30B interfere with each other can be reduced.

According to the first embodiment, since the holding member 40 holds the two electrodes 30A and 30B, the arrangement positions of the two electrodes 30A and 30B can be stabilized.

According to the first embodiment, the two electrodes 30A and 30B can be held between the protrusions 44A and 45A and between the protrusions 44B and 45B, respectively.

According to the first embodiment, the projections 46A and 46B can prevent the electrode 30A from coming out of the space between the protrusions 44A and 45A and prevent the electrode 30B from coming out of the space between the protrusions 44B and 45B.

According to the first embodiment, when the electrode 30A is inserted between the protrusions 44A and 45A, the electrode 30A presses the surface 46Aa of the projection 46A, so that a force in a direction away from the protrusion 44A acts on the protrusion 45A. As a result, the protrusion 45A bends, and the space between the protrusions 44A and 45A increases. In addition, when the electrode 30B is inserted between the protrusions 44B and 45B, the electrode 30B presses the surface 46Ba of the projection 46B, so that a force in a direction away from the protrusion 44B acts on the protrusion 45B. As a result, the protrusion 45B bends, and the space between the protrusions 44B and 45B increases. As a result, the electrode 30A can be easily inserted between the protrusions 44A and 45A. In addition, the electrode 30B can be easily inserted between the protrusions 44B and 45B.

According to the first embodiment, the protrusion 43A and the surface 41a of the base portion 41 are engaged with the flange portion 23A of the DIN rail 20, and the protrusion 43B and the surface 41a of the base portion 41 are engaged with the flange portion 23B of the DIN rail 20, whereby the holding member 40 is held by the DIN rail 20.

According to the first embodiment, the holding member 40 and the DIN rail 20 can be engaged with each other with a simple configuration in which the flange portions 23A and 23B are sandwiched between the pair of protrusions 43A and 43B and the surface 41a of the base portion 41.

In the first embodiment, the projections 46A and 45B are provided on the protrusions 45A and 45B, respectively. However, the projections 46A and 46B may be provided on the protrusions 44A and 44B, respectively. In this case, the pair of protrusions 44A and 44B corresponds to the pair of second protrusions, and the pair of protrusions 45A and 45B corresponds to the pair of first protrusions. Moreover, the projections 46A and 46B may be provided on both the protrusions 45A and 45B and the protrusions 44A and 44B.

In the first embodiment, of the protrusions 43A and 43B, the protrusion 43B has the surface 43Ba inclined with respect to the width direction 3. However, the protrusion 43A may have a surface inclined with respect to the width direction 3. Moreover, both the protrusions 43A and 43B may have surfaces inclined with respect to the width direction 3.

In the first embodiment, the DIN rail 20 corresponds to a rail. However, the rail is not limited to the DIN rail 20 as long as the rail can be attached with the electronic device 50. For example, the rail may be a member in which a plurality of members (for example, a member corresponding to the bottom portion 21 and a member corresponding to the pair of side portions 22A and 22B) are combined to form a rail shape. In this case, the member corresponding to the pair of side portions 22A and 22B of the rail may be inclined with respect to the member corresponding to the bottom portion 21. That is, in this case, the member corresponding to the pair of side portions 22A and 22B of the rail may extend from the member corresponding to the bottom portion 21 not in the thickness direction 4 orthogonal to the longitudinal direction 2 and the width direction 3 but along the thickness direction not orthogonal to but intersecting the longitudinal direction 2 and the width direction 3.

The shape of the holding member 40 is not limited to the shape illustrated in FIGS. 1 and 2 on the condition that the two electrodes 30A and 30B can be held.

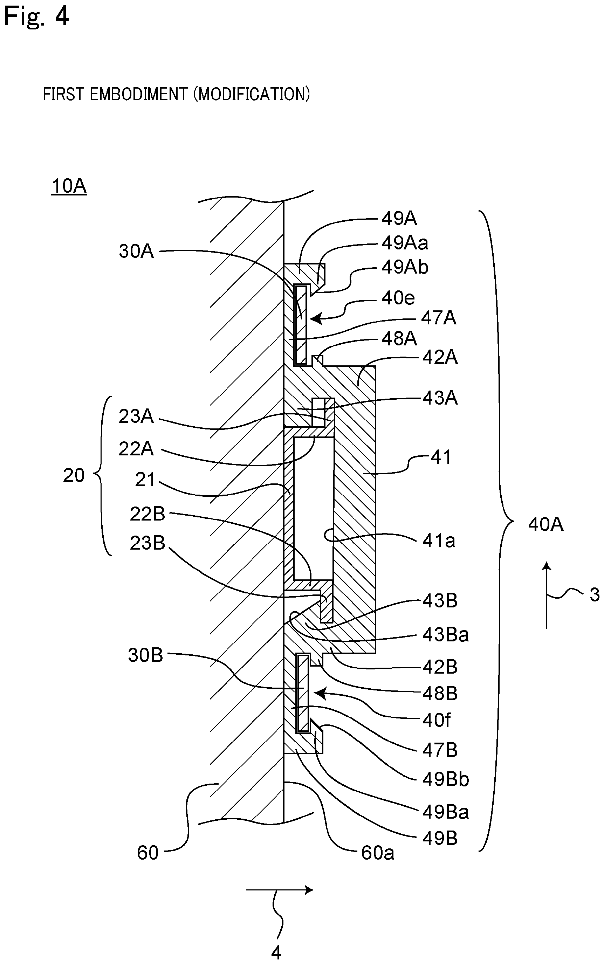

FIG. 4 is a diagram of a wireless power-feeding apparatus according to a modification of the first embodiment of the present disclosure, corresponding to the A-A cross section in FIG. 1. Hereinafter, a configuration of a wireless power-feeding apparatus 10A according to a modification of the first embodiment will be described with reference to FIG. 4. In the following description, differences from the wireless power-feeding apparatus 10 illustrated in FIGS. 1 and 2 will be described. On the other hand, common points with the wireless power-feeding apparatus 10 illustrated in FIGS. 1 and 2 are denoted by the same reference numerals, and description thereof will be omitted. The same applies to the second embodiment and the third embodiment described later.

A holding member 40A of the wireless power-feeding apparatus 10A illustrated in FIG. 4 includes a pair of protrusions 47A and 47B and a pair of protrusions 48A and 48B, instead of the pair of protrusions 44A and 44B and the pair of protrusions 45A and 45B. The pair of protrusions 47A and 47B and the pair of protrusions 48A and 48B protrude outward in the width direction 3 from the pair of side portions 42A and 42B, respectively. The protrusion 47A is located on the proximal end side of the side portion 42A with respect to the protrusion 48A. The protrusion 47B is located on the proximal end side of the side portion 42B with respect to the protrusion 48B.

Bent portions 49A and 49B are formed at the tips of the pair of protrusions 47A and 47B. The bent portion 49A faces the protrusion 48A in the width direction 3. The bent portion 49B faces the protrusion 48B in the width direction 3. A projection 49Aa is formed at the tip of the bent portion 49A, and a projection 49Ba is formed at the tip of the bent portion 49B. The projection 49Aa protrudes toward the protrusion 48A, and the projection 49Ba protrudes toward the protrusion 48B.

With such a configuration, in the configuration shown in FIG. 4, the electrode 30A is held in a space 40e between the projection 49Aa and the protrusion 48A and the protrusion 47A, and the electrode 30B is held in a space 40f between the projection 49Ba and the protrusion 48B and the protrusion 47B. In addition, in the configuration illustrated in FIG. 4, the respective spaces 40e and 40f in which the electrodes 30A and 30B are held open in the thickness direction 4. In the configuration illustrated in FIG. 2, the gap 40c between the protrusions 44A and 45A (space into which the electrode 30A is inserted) and the gap 40d between the protrusions 44B and 45B (space into which the electrode 30B is inserted) are open in the width direction 3.

A projection 49Aa includes a surface 49Ab facing the protrusion 48A. The surface 49Ab is inclined with respect to the thickness direction 4. Similarly, a projection 49Ba includes a surface 49Bb facing the protrusion 48B. The surface 49Bb is inclined with respect to the thickness direction 4.

In the process of being held by the holding member 40, the electrodes 30A and 30B are brought close to the surfaces 49Ab and 49Bb of the projections 49Aa and 49Ba along the thickness direction 4. The electrodes 30A and 30B come into contact with and press the surfaces 49Ab and 49Bb. As a result, the bent portions 49A and 49B are bent, and the space between the projection 49Aa and the protrusion 48A and the space between the projection 49Ba and the protrusion 48B are widened, respectively. As a result, the electrode 30A is held in the space 40e by the projection 49Aa, the protrusion 48A, and the protrusion 47A, and the electrode 30B is held in the space 40f by the projection 49Ba, the protrusion 48B, and the protrusion 47B.

### <Second Embodiment>

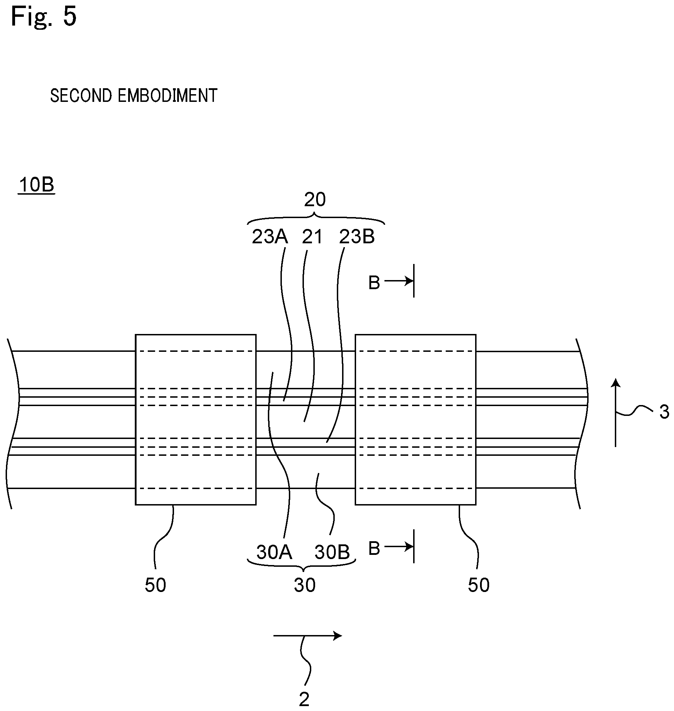

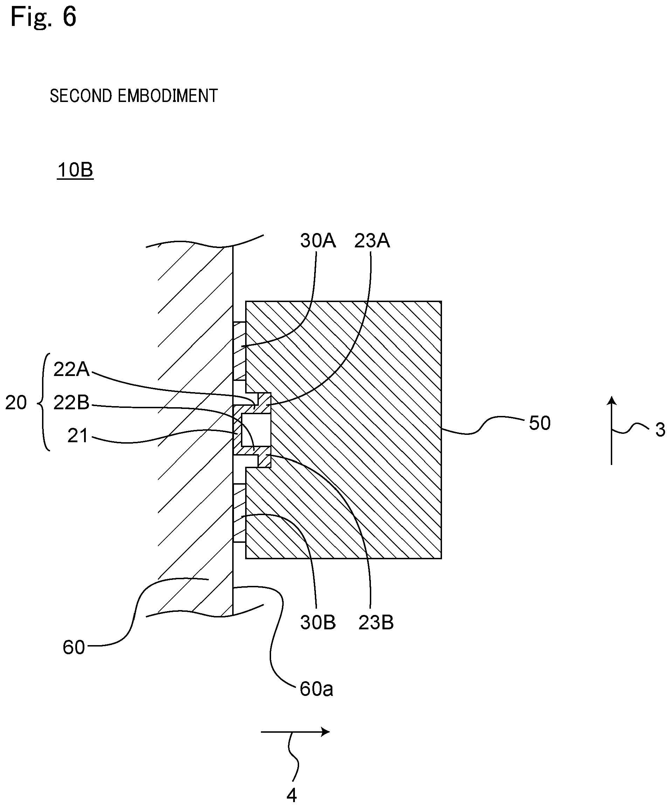

FIG. 5 is a plan view of a wireless power-feeding apparatus according to a second embodiment of the present disclosure. FIG. 6 is a cross-sectional view taken along line B-B in FIG. 5. A wireless power-feeding apparatus 10B according to the second embodiment is different from the wireless power-feeding apparatus 10 according to the first embodiment in that the wireless power-feeding apparatus 10B according to the second embodiment does not include the holding member 40.

In the second embodiment, the electrodes 30A and 30B are attached to the wall surface 60a of the wall 60 as illustrated in FIG. 6. Various known configurations are adopted as the configuration in which the electrodes 30A and 30B are attached to the wall surface 60a. For example, as similar to the DIN rail 20, a plurality of through holes (not illustrated) may be formed in the electrodes 30A and 30B. By inserting screws or the like into the through holes, the electrodes 30A and 30B can be attached to the wall surface 60a. Further, for example, the electrodes 30A and 30B may be attached to the wall surface 60a by a known means such as fitting.

### <Third Embodiment>

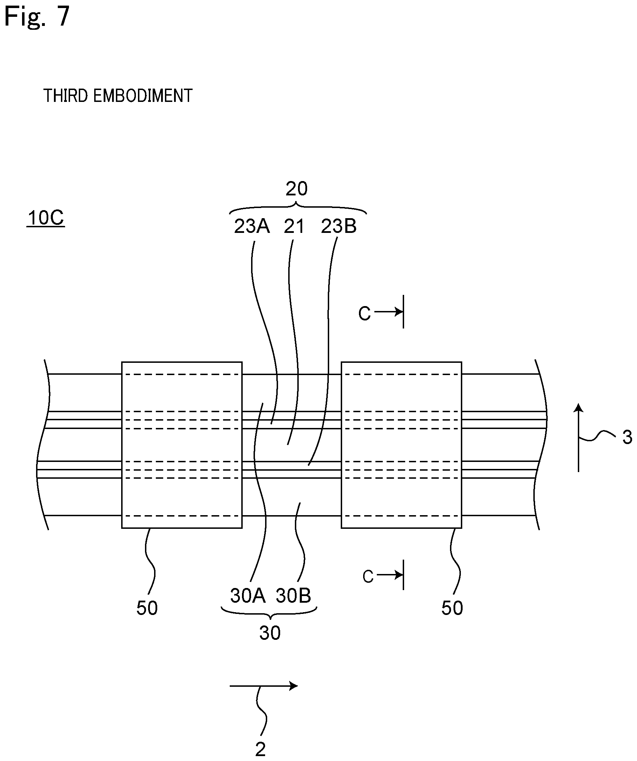

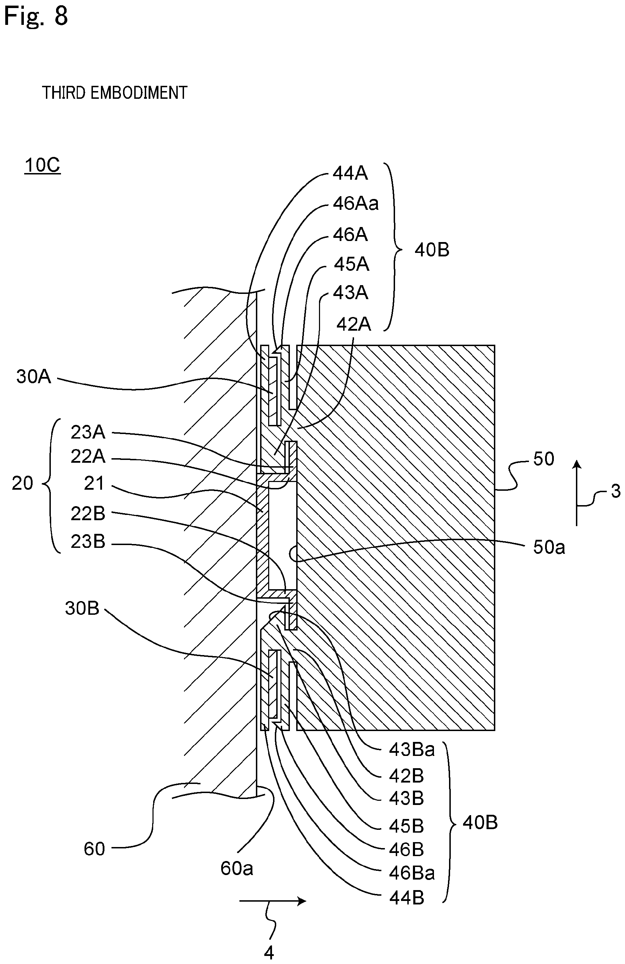

FIG. 7 is a plan view of a wireless power-feeding apparatus according to a third embodiment of the present disclosure. FIG. 8 is a cross-sectional view taken along line C-C in FIG. 7. A wireless power-feeding apparatus 10C according to the third embodiment is different from the wireless power-feeding apparatus 10 according to the first embodiment in that the wireless power-feeding apparatus 10C includes a holding member 40B that holds the electrodes 30A and 30B, and the holding member 40B is provided to the electronic device 50.

As illustrated in FIG. 8, the pair of side portions 42A and 42B of the holding member 40B protrude in the width direction 3 from a surface 50a of the electronic device 50. That is, in the third embodiment, the electronic device 50 also functions as a main body of the holding member.

The holding member 40B of the wireless power-feeding apparatus 10C of the third embodiment includes the pair of protrusions 43A and 43B, the pair of protrusions 44A and 44B, and the pair of protrusions 45A and 45B, in addition to the pair of side portions 42A and 42B. In the third embodiment, the pair of protrusions 43A and 43B and the surface 50a of the electronic device 50 are engaged with the flange portions 23A and 23B of the DIN rail 20. In the third embodiment, as in the first embodiment, the protrusions 44A and 45A sandwich the electrode 30A, and the protrusions 44B and 45B sandwich the electrode 30B. As a result, the electronic device 50 is supported by the DIN rail 20, and the holding member 40B provided to the electronic device 50 holds 30A and 30B.

According to the third embodiment, the space for disposing the holding member 40B and the space for disposing the electronic device 50 can be shared. Therefore, the space for disposing the holding member 40B and the electronic device 50 can be saved.

Note that, by appropriately combining arbitrary embodiments among the various embodiments described above, it is possible to achieve the effects of the respective embodiments.

Although the present disclosure has been sufficiently described in connection with preferred embodiments with reference to the drawings as appropriate, various modifications and corrections are apparent to those skilled in the art. Such modifications and corrections should be understood to be included within the scope of the present disclosure according to the appended claims as long as they do not depart therefrom.

### REFERENCE SIGNS LIST

- 2: longitudinal direction
- 3: width direction
- 4: thickness direction
- 20: DIN rail (rail)
- 21: bottom portion
- 22A: side portion
- 22B: side portion
- 23A: flange portion
- 23B: flange portion
- 30A: electrode
- 30B: electrode
- 40: holding member
- 41: base portion (main body portion)
- 41a: surface (engagement portion)
- 42A: side portion (main body portion)
- 42B: side portion (main body portion)
- 43A: protrusion (engagement portion)
- 43B: protrusion (engagement portion)
- 44A: protrusion (second protrusion)
- 44B: protrusion (second protrusion)
- 45A: protrusion (first protrusion)
- 45B: protrusion (first protrusion)
- 46A: projection
- 46Aa: surface (inclined surface)
- 46B: projection
- 46Ba: surface (inclined surface)
- 50: electronic device

## Claims

1. A wireless power-feeding apparatus comprising:
a rail capable of supporting at least one electronic device; and
two electrodes configured to wirelessly feed power to the electronic device by an electric field coupling system, and wherein
the two electrodes extend along a longitudinal direction of the rail, and are disposed so as to sandwich the rail in a width direction of the rail.

2. The wireless power-feeding apparatus of claim 1, further comprising:
a holding member for holding the two electrodes is further provided.

3. The wireless power-feeding apparatus of claim 2, further comprising:
a main body portion; and
a pair of first protrusions and a pair of second protrusions, wherein
the pair of first protrusions and the pair of second protrusions protrude outward from the main body portion in the width direction, are provided corresponding to the two electrodes respectively, and face each other in a thickness direction of the rail intersecting the width direction and the longitudinal direction, wherein
one of the two electrodes are sandwiched between one of the pair of first protrusions and one of the pair of second protrusions, and wherein
the other of the two electrodes are sandwiched between the other of the pair of first protrusions and the other of the pair of second protrusions.

4. The wireless power-feeding apparatus of claim 3, wherein
each of the pair of first protrusions comprise a projection protruding toward each of the second protrusions at the tip of each of the pair of first protrusions, and wherein
the projections restrict the respective two electrodes, sandwiched by the pair of first protrusions and the pair of second protrusions, from coming out of the spaces between the pair of first protrusions and the pair of second protrusions.

5. The wireless power-feeding apparatus of claim 4, wherein
each of the projections have an inclined surface inclined with respect to the pair of second protrusions toward the outside of the main body portion.

6. The wireless power-feeding apparatus of any one of claim 2 to 5, wherein
the holding member comprises an engagement portion engageable with the rail.

7. The wireless power-feeding apparatus of claim 6, wherein
the rail comprising:
a bottom portion;
a pair of side portions protruding in the thickness direction of the rail intersecting the width direction and the longitudinal direction, from both ends of the bottom portion in the width direction; and
a pair of flange portions each protruding in the width direction from each of the pair of side portions toward the outside thereof, and wherein
the engagement portion holds the pair of flange portions from both sides in the thickness direction of the rail.

8. The wireless power-feeding apparatus of any one of claim 2 to 7, wherein
the holding member is provided to the electronic device.

9. The wireless power-feeding apparatus of any one of claim 1 to 8, wherein
the rail is a DIN rail.
